# EUROPEAN PATENT SPECIFICATION

(11) **EP 2 526 046 B1**
(45) Date of publication and mention of the grant of the patent: **19.04.2017**
(21) Application number: 11701536.2
(22) Date of filing: 19.01.2011
(51) Int. Cl.: C01B 3/50, C01B 32/50, F25J 3/06

(54) **Separation of carbon dioxide from a synthesis gas**
Trennung von Kohlenstoffdioxid aus Synthesegas
Séparation du dioxyde de carbone d'un gaz de synthèse

(30) Priority: 21.01.2010 EP 10250091
(43) Date of publication of application: 28.11.2012
(73) Proprietor: BP Alternative Energy International Limited, Sunbury on Thames TW16 7BP (GB)
(72) Inventor: CONSONNI, Stefano, I-29122 Piacenza (IT); GATTI, Manuele, I-26010 Ripalta Cremasca (IT); MARTELLI, Emanuele, Piacenza (IT); VIGANO, Federico, I-29121 Piacenza (IT)
(74) Representative: Stephen, Robert John
(86) International application number: PCT/GB2011/000056
(87) International publication number: WO 2011/089383

(56) References cited:
- WO-A2-03/051482
- FR-A1- 2 877 939
- US-A- 3 367 882
- US-B1- 6 301 927

## Description

This invention relates to the separation of carbon dioxide, or a carbon dioxide-containing mixture from synthesis gas. Examples described provide the separation of a carbon dioxide-rich stream and a hydrogen-rich stream from a synthesis gas stream.

In examples, the separation of carbon dioxide is a part of an integrated process in which synthesis gas derived from for example the reforming of natural gas or the gasification of coal, petroleum coke or biomass is first shifted to increase its hydrogen and carbon dioxide content and then treated cryogenically to remove liquid carbon dioxide.

For environmental reasons it is becoming increasingly desirable to generate power from carbonaceous feedstocks whilst minimising the emission of carbon dioxide into the atmosphere. Broadly speaking there are three approaches to achieving this outcome. In so called 'post-combustion' technologies the carbonaceous fuel is burnt in air and the carbon dioxide so generated is removed by scrubbing the flue gases before they are vented. Alternatively in 'oxyfuel' technologies the carbonaceous fuel is burnt in oxygen and the combustion products continuously recycled to the burners after removal of water. Meanwhile a side-stream of relatively pure carbon dioxide is removed from the recycle and taken away for storage.

The final approach and the one with which the process of the present invention is generally concerned comprises the so-called 'pre-combustion' technologies. In these technologies the carbonaceous fuel is either gasified or reformed at high temperature in the presence of air to produce raw synthesis gas (a mixture principally comprising the combustion products carbon monoxide, carbon dioxide, hydrogen, and steam together with the un-reacted components of the air (principally nitrogen)) and if the carbonaceous fuel is 'sour' impurities such as hydrogen sulphide, carbonyl sulphide and volatile lower mercaptans. The raw synthesis gas is then treated with steam in a 'shift' unit which catalytically converts the carbon monoxide and water into carbon dioxide and hydrogen by means of the 'Water Gas Shift' reaction. Typically this reaction is effected to produce a 'shifted' product substantially free of carbon monoxide and consisting essentially of carbon dioxide, steam, hydrogen and nitrogen which can then be first cooled and dried to remove water and then treated to remove carbon dioxide leaving hydrogen and nitrogen which can be burnt cleanly to generate power.

A number of approaches to separating carbon dioxide from the shifted product have been proposed including inter alia the use of membranes which are permeable to hydrogen and optionally nitrogen, membranes which are permeable to carbon dioxide, and solvent extraction processes. Recently in our co-pending application PCT/GB2009/001810 we have described an improved process for effecting such a separation cryogenically. A process described comprises in general terms first compressing and cooling the dried shifted product to a pressure and temperature at which carbon dioxide liquefies and thereafter separating the liquid carbon dioxide so generated from the other, non-condensable gases. Thereafter the separated components are returned to a temperature and pressure suitable for further use by a series of heat exchangers and turbo expanders integrated amongst themselves and with those used to cool the incoming shifted mixture so that the total energy across the whole process is managed for optimum efficiency. The application describes process configurations for achieving this outcome and in particular the use of compact, diffusion-bonded heat exchangers to simplify the demands on the hardware needed.

In examples described, the synthesis gas is compressed to a high pressure of 150 bar or more to liquefy the carbon dioxide.

While the methods and apparatus described are advantageous, there would be benefit in developing further methods of separating the carbon dioxide from synthesis gas, preferably using less power than prior methods and/or with a decreased loss of hydrogen to the separated carbon dioxide product.

Aspects of the invention seek to solve or mitigate one or more of the problems indicated above, or other problems and/or to provide a alternative separation methods.

The invention provides a method of separating a carbon-dioxide-rich liquid stream from a synthesis gas including carbon dioxide and hydrogen, the method comprising the steps of:
a) carrying out a first cooling step to cool a synthesis gas feed stream such that a first two-phase mixture is formed;
b) passing the first two-phase mixture at a first pressure and a first temperature to a first separator,
c) carrying out a first separation to separate the first mixture into a first CO₂-rich liquid stream and a H₂-rich gas stream;
d) pressurizing the H₂-rich gas stream;
e) carrying out a second cooling step to cool the H₂-rich gas stream such that a second two-phase mixture is formed,
f) passing the second mixture at a second pressure and a second temperature to a second separator, the second pressure being higher than the first pressure;
g) carrying out a second separation to separate the second mixture into a second CO₂-rich liquid stream and a further H₂-rich gas stream.

The method preferably further includes the step of feeding a separated hydrogen-rich vapour stream to an expansion system including an expander, wherein the hydrogen rich stream is subjected to expansion such that an expanded hydrogen rich stream is withdrawn from the expander at reduced temperature and pressure, the method further including using the expanded hydrogen rich vapour stream as a coolant.

As discussed further below, in examples of the invention the expanded hydrogen-rich vapour stream is preferably used to cool one or more streams selected from a hydrogen-rich gas stream, a carbon dioxide stream and a synthesis gas stream.

As discussed further below, in examples of the invention, the expander preferably effects isentropic expansion of the hydrogen rich vapour in the expander and generates motive power.

The method may further include the steps of exchanging heat between a separated H₂-rich stream, a separated CO2-rich stream and/or a feed stream using at least one heat exchanger, for example of the first and/or second cooling steps, and expanding a separated H₂-rich vapour stream to recover mechanical work.

By carrying out a two-stage separation with the two steps being at different pressures, it is possible to separate out a significant amount of carbon dioxide from the synthesis gas before the compression of the gas stream to a higher pressure is carried out, thus reducing the amount of gas being compressed to the high pressure and thus potentially reducing the power required for compression of the gases in the system overall.

The term "synthesis gas feed stream" used herein preferably refers to a shifted synthesis gas stream including hydrogen and carbon dioxide. The synthesis gas feed stream may also include other components, for example carbon monoxide and hydrogen sulphide. In some methods however, hydrogen sulphide is removed from the syngas before separation of the carbon dioxide. It should be appreciated however that in the case of an overall system in which a shift reaction is carried out, some steps of the process of the invention may be carried out prior to the shift reaction step, and/or removal of hydrogen sulphide or other components of the gas. In examples of the invention, the features of the carbon dioxide separation system described may be integrated or combined with other systems for example solvent-based acid gas separation systems.

In some examples, the first pressure is substantially the feed pressure of the shifted synthesis gas. In some examples of the invention, it will be preferred for substantially no compression of the feed gas to be carried out upstream of the first separation stage. In particular where the native pressure of the feed gas (withdrawn from for example a water gas shift reactor) is at a sufficiently high pressure for condensation of liquid carbon dioxide to be achieved by cooling, further compression upstream of the separator will not be essential in all examples.

For example, the first pressure may be greater than 30 bar, preferably greater than 50 bar. In some examples, the feed pressure of the syngas feed stream may be between 50 and 60 bar. However, in some cases the feed pressure may be higher, for example greater than 70, 80, 90 or greater than 100bar. Preferably the first pressure is not less than 50 bar.

The method may include the step of increasing the pressure of the feed stream upstream of the first separation step. The step of increasing the pressure may be carried out in any appropriate way, preferably using one or a series of compressors. The stream may for example be pressurised to above 50 bar, or 70 bar or more. This can be particularly preferred where the feed gas pressure is too low for the separation step to be carried out or carried out efficiently.

A multistage compression system may be preferred for example for higher discharge pressures from the compression system but is optional, in particular for lower discharge pressures from the compression system. Generally, the compressor(s) of any compression system used in the apparatus may be mounted on a shaft that may be driven by an electric motor, gas turbine or steam turbine. Alternatively, or in addition, compressor(s) of a compression system and turboexpanders of a turboexpansion system may be mounted on a common shaft so that the isentropic expansion of the hydrogen rich vapour in the turboexpanders may be used to drive the compressor(s).

A typical multistage compression system for use in the examples of the present invention may comprise at least one low pressure (LP) compressor, preferably two or three LP compressors mounted on a common drive shaft and at least one high pressure (HP) compressor, preferably one or two HP compressors mounted on a further common drive shaft (the drive shafts may be connected via a gear system). The LP and HP compressors are arranged in series. As would be well known to the person skilled in art, increased compression efficiency is achieved by balancing the compression duty across the compressors of the series. Thus, it is preferred that the compression ratios between successive compressors of the series be substantially the same.

The practical upper limit of the first pressure will depend in part on the pressure selected for the second pressure and/or any further separation pressures downstream in the separation process.

Where a reduction is sought of the compression to high pressures of the full syngas feed stream, then the first and second pressures will generally be chosen such that there is a significant difference in pressure between the first and second stages, for example the first pressure may be less than 80%, preferably less than 60%, preferably less than 50% or 40% or less of the second pressure. In arrangements where more than two separations are carried out at more than two different pressures, the pressure differences between the separations will be chosen accordingly. For example the first pressure may be less than 80%, preferably less than 60%, preferably less than 50% or 40% or less of the pressure of the final separation step.

The first pressure may be less than 150 bar, preferably less than 100 bar. For example, the first pressure may be 80 bar or less, for example about 60 bar.

The second pressure may be for example 100 bar or more, 120 bar or more, 150 bar or more, 180 bar or more, or 200 bar or more. Where the method includes more than two separation steps at more than two different pressures, preferably the final separation step is carried out at a pressure of 100 bar or more, 120 bar or more, 150 bar or more, 180 bar or more, or 180 bar or more. Where there are more than two separation steps, intermediate separation steps might or might not be carried out at pressures substantially different from the first and/or second pressures. Preferably the second pressure is greater than 100 bar, preferably 150 bar or more.

The initial temperature of the syngas will generally depend on the upstream processing of the syngas but may be for example 20 to 60 degrees C.

The first temperature will be selected in dependence on the first pressure chosen so that liquid carbon dioxide is formed for separation in the first separation step. For example, the first temperature may be less than -30 degrees C, for example less than -40 degrees C, for example less than -45 degrees C, for example less than -50 degrees C.

The second temperature may be substantially the same as the first temperature.

In some arrangements, the first and second temperatures will be substantially the same (for example differing by less than 5, preferably less than 3 degrees C). In such an arrangement, it is possible to separate further liquid CO₂ from the H₂-rich fraction by increasing the pressure of that fraction for example to the second pressure.

In other arrangements, it will additionally be preferred for the second temperature to be less than the first temperature. The second temperature may be less than -50 degrees C, for example -53 degrees C or less.

The method may further include the step of carrying out a third separation of liquid carbon dioxide at a third separation stage, a two-phase mixture at the third separation stage being at a third temperature and third pressure. The third pressure may be the same as the first or second pressure, or may be different from either.

The third temperature may be the same as or different from the first and/or second temperatures.

Each separation stage may be operated at different pressures, or one or more adjacent stages may be operated at substantially the same pressure, for example the temperatures of the same-pressure stages being different from each other.

Thus in some arrangements, two or more separation steps might be carried out before compression, or further compression, of the H₂-rich gas stream

The pressurizing of the H₂-rich stream to the second pressure may include using one or more compressors, for example a plurality of compressors arranged in series.

Preferably at least one, typically a series of, compressors is linked by inter-stage heat exchangers or other devices for removing heat generated by the compression.

A single compressor, or other appropriate apparatus, for example a pump, may be provided, or a plurality of such apparatus (being the same or a combination) may be provided to increase the pressure. One or more cooling devices may be provided associated with the pressurizing apparatus, and/or elsewhere in the system as appropriate.

The first and second temperatures of the two separation stages at the different pressures may be substantially the same as each other, or may be different. For example the second temperature may be lower than the first temperature. Even where the first and second temperatures are the same, it will be understood that cooling of the stream will generally be required to remove heat generated during the pressurization.

In a preferred example, after the single compressor, or final compressor of the series, the compressed mixture is cooled as required.

The first and second cooling steps may be carried out using the same and/or different cooling elements of a cooling system. The cooling system may for example include one or more heat exchangers.

In a particularly preferred arrangement, at least one heat exchanger of the cooling system is arranged for transferring heat between two or more of the syngas feed stream, a H₂-rich stream, and a CO₂ rich stream. By arranging for heat transfer between the warmer and colder streams in the system, better heat efficiency can be achieved.

Preferably at least one of the cooling steps is carried out using one or more internal coolant streams.

Thus in preferred arrangements, cool product streams formed in the separation process are subsequently used to effect, or assist, cooling of warmer feed and/or product streams.

Alternatively, or in addition, the method may include cooling one or more streams against an external coolant or refrigerant. For example, cooling of one or more of the feed, intermediate or product streams may be effected wholly or in part using an external refrigerant. For example one or more streams may be cooled against an ethane or propane refrigerant. More than one external refrigerant stream may be provided.

In some examples, the cooling of a particular stream may be effected or assisted using one or more coolants or refrigerants. For example a stream may be cooled against a combination of one or more internal coolant or refrigerant streams and/or one or more external coolants or refrigerants.

The method may include cooling a stream against a plurality of streams of internal and/or external coolant or refrigerant. In that way, optimization of heat transfer between different streams in the apparatus can be sought. Recovery of cooling energy from a cold stream at one part of the apparatus to effect cooling of a "warm" stream can significantly increase the heat efficiency of the method.

A cooling step is preferably carried out using a multi-channel heat exchanger carrying one or more internal and/or external coolants and/or refrigerants.

One or more of the heat exchangers may include multichannel devices for effecting transfer of heat between a plurality of internal and/or external streams within the apparatus.

While it is at least theoretically possible for a single heat exchanger to be provided for each temperature to be achieved with in the process, in practical arrangements, it may be preferred to limit the number of different streams accommodated by each multichannel device. There may also be benefit in carrying out cooling in a plurality of smaller cooling steps rather than fewer larger temperature steps. Therefore, the cooling system may include a plurality of heat exchangers in relation to each cooling step. For example, more than two, three or four heat exchanger elements may be provided for each temperature change to be effected. As an example, heat exchangers transferring heat between fewer than 10 or fewer than 6 different streams in the apparatus may be preferred. However, it is envisaged that a large number of streams might effectively be managed within a single multichannel heat exchanger.

In some integrations it may be possible to reduce or remove the need for external refrigerant cooling.

Preferably, one or more of the heat exchangers is a multichannel heat exchanger, for example a plate fin heat exchanger or a printed circuit heat exchanger. Such a heat exchanger preferably includes a number of channels through which different streams can pass, the channels being in thermal communication with each other.

Alternatively, the dried synthesis gas feed stream may be pre-cooled against cold process streams using at least two, preferably, 2 to 8, for example, 4 shell and tube heat exchangers. These shell and tube heat exchangers could be arranged for example in series and/or in parallel. Where the shell and tube heat exchangers are arranged in parallel, the synthesis gas feed stream would be divided to form a plurality of sub-streams that are fed to the heat exchangers and the cooled sub-streams that exit the heat exchangers are subsequently recombined. It is also envisaged that the dried synthesis gas stream may be cooled using a combination of a multichannel heat exchanger and one or more shell and tube heat exchangers.

Typically, in examples of the invention, the heat exchanger system comprises at least one multichannel heat exchanger with the synthesis gas stream being passed through a channel of the multichannel heat exchanger in heat exchange relationship with a plurality of internal refrigerant/coolant streams that are passed through further channels in the multichannel heat exchanger. Representative examples of a multichannel heat exchanger include those described in US 6622519, WO 2004/016347, EP 212878 and EP 292245 the disclosures of which are incorporated herein by reference. As an alternative, or in addition to pre-cooling the synthesis gas stream against an external refrigerant in a heat exchanger of the compression system, it is envisaged that one or more external refrigerant streams may be passed through yet further channels in the multichannel heat exchanger thereby providing additional cooling duty for the HP synthesis gas stream. Preferably, the HP synthesis gas stream is passed in a counter-current direction through the multichannel heat exchanger to the internal refrigerant streams and optional external refrigerant stream(s). Preferably in some examples, the heat exchanger system comprises a plurality of refrigeration stages arranged in series where each stage in the series comprises either (i) a single multichannel heat exchanger, or (ii) a plurality of multichannel heat exchangers arranged in parallel, for example, 2 or 3 multichannel heat exchangers arranged in parallel. For example, the heat exchanger system comprises three refrigeration stages arranged in series with the internal refrigerant streams and optional external refrigerant stream(s) being fed to each successive stage of the series at successively lower temperatures. In an example of a heat exchanger system, a first refrigeration stage comprises two single-pass multichannel heat exchangers arranged in parallel, a second refrigeration stage comprises three 3-pass multichannel heat exchangers arranged in parallel, and a third refrigeration stage comprises a single 4-pass multichannel heat exchanger. Thus, the synthesis gas stream can be divided and recombined as it passes through the stages of the heat exchanger system thereby optimising the heat exchange with the internal refrigerant streams and/or external refrigerant stream(s). However, alternative arrangements for a plurality of multichannel heat exchangers may be adopted.

Alternatively, or in addition, the heat exchanger system may comprise a plurality of refrigeration stages wherein each refrigeration stage comprises either a single stand-alone heat exchanger or a plurality of stand-alone heat exchangers arranged in parallel. Thus, for example, the synthesis gas stream (or other stream) is cooled as it is passed through the refrigeration stages of the heat exchanger system by heat exchange with a plurality of internal refrigerant streams and optional external refrigerant stream(s) that are fed to the stand-alone heat exchanger(s) of each successive refrigeration stage at successively lower temperatures. It is preferred that the synthesis gas stream is passed through the stand-alone heat exchangers in a counter-current direction to the internal refrigerant streams and optional external refrigerant stream(s) that are fed to the stand-alone heat exchangers.

It is also envisaged that the heat exchanger system may comprise both multichannel and stand-alone heat exchangers. Thus, the heat exchanger system may comprise a plurality of refrigeration stages arranged in series wherein each refrigeration stage comprises (i) a single multichannel heat exchanger, or (ii) a single stand-alone heat exchanger, or (iii) a plurality of multichannel heat exchangers and/or a plurality of stand-alone heat exchangers arranged in parallel.

The multichannel heat exchanger(s) of the heat exchanger system may be of the type employed in processes for generating liquefied natural gas such as a brazed aluminium plate-fin heat exchanger or a diffusion-bonded heat exchanger (for example, a printed circuit heat exchanger (PCHE) as supplied by Heatric). Alternatively, the multichannel heat exchanger(s) may be a multiple body shell and tube heat exchanger comprising either (a) a tube arranged in the shell of the heat exchanger wherein the shell of the heat exchanger comprises a plurality of compartments and wherein the synthesis gas stream is passed through the tube and an internal refrigerant stream or external refrigerant stream is passed through each compartment of the shell in heat exchange relationship with the synthesis gas that is flowing through the tube; or (b) a plurality of tubes arranged in the shell of the heat exchanger wherein the shell comprises a single compartment and the synthesis gas is passed through the compartment and an internal refrigerant stream or an external refrigerant stream is passed through each of the tubes in heat exchange relationship with the synthesis gas that is flowing through the single compartment of the shell. Accordingly, the term "channel" encompasses the channels formed between the plates of a brazed aluminium plate-fin heat exchanger or a diffusion-bonded heat exchanger and also the compartment(s) and tube(s) of a multiple body shell and tube heat exchanger.

The stand-alone heat exchanger(s) of the compression system may be of the shell and tube type (a single body shell and tube heat exchanger) with the synthesis gas stream passing through the tube side and an internal refrigerant stream or external refrigerant stream passing through the shell side of the heat exchanger or vice versa. However, a process that employs stand-alone heat exchangers to pre-cool the synthesis gas stream may be of reduced efficiency compared with a process that employs a multichannel heat exchanger, in whole or in part, to cool the synthesis gas stream in step (B) of the present invention.

The cooled stream that exits the heat exchanger system is a two phase stream comprised of a liquid phase and vapour phase. There is generally a practical limit on the temperature to which the gas stream may be cooled in the heat exchanger system as the temperature should normally be maintained above a value where solid CO₂ will form. This typically occurs at a temperature of -56°C (the triple point for pure CO₂ is at 5.18 bar and at a temperature of -56.4°C) although the presence of H₂ may depress this freezing point. The amount of cooling that is achieved in the heat exchanger system owing to heat exchange with the plurality of internal refrigerant streams will be dependent upon the amount of cooling of the isentropically expanded hydrogen rich vapour streams that is achieved in the turboexpansion system which, in turn, is dependent on the pressure of the hydrogen rich vapour stream that is formed and the pressure of the H₂ rich vapour stream that exits a turboexpander or a final turboexpander of the turboexpansion system. The amount of electricity generated by turboexpanders of a turboexpansion system will also be dependent on the extent to which the hydrogen rich vapour is subjected to isentropic expansion in the turboexpansion system which is also dependent on the pressure of the H₂ rich vapour stream formed and the pressure of the H₂ rich vapour stream that exits the final turboexpander of the turboexpansion system.

The term "refrigerant" used herein preferably includes any appropriate coolant or refrigerant. Furthermore, the term "coolant" preferably includes any appropriate coolant or refrigerant.

Preferably the term "internal coolant streams" includes product streams produced in the process. For example the internal coolant streams include CO₂-rich streams and H₂-rich streams formed in the separation step(s). Preferably, where appropriate, the term "internal coolant streams" includes any appropriate coolant or refrigerant stream.

Preferably the terms "external refrigerant" or "external coolant" include a refrigerant or coolant that is provided in an external refrigeration circuit. Accordingly, liquid CO₂ that is formed in the process of the present invention will not generally be regarded as an external refrigerant. Suitable external refrigerants that may be used as refrigerant in the heat exchanger(s) include propane, ethane, ethylene, ammonia, hydrochlorofluorocarbons (HCFCs) and mixed refrigerants. Typical mixed refrigerants comprise at least two refrigerants selected from the group consisting of butanes, propanes, ethane, and ethylene. These refrigerants may be cooled to the desired refrigeration temperature in external refrigerant circuits using any method known to the person skilled in the art including methods known in the production of liquefied natural gas (LNG) or natural gas liquids (NGLs).

These refrigerants may also be cooled to the desired refrigeration temperature for example by heat exchange with one or more cold isentropically expanded H₂ rich vapour streams from the turboexpanders of the turboexpansion system. The external refrigerant for the cryogenic separation stage is selected so as to achieve the desired operating temperature. For example, propane may be used as refrigerant when the feed temperature of the gas stream is in the range of -15 to greater than -30°C and the desired operating temperature of the cryogenic separation stage is in the range of -20 to greater than -30°C while ethane and/or ethylene may be used as external refrigerant when the feed temperature of the gas stream is in the range of -30 to -40°C and the desired operating temperature for the cryogenic separation stage is in the range of -40 to -55°C, preferably, - 45 to -50°C. Other arrangements are possible.

The method may further include warming the H2-rich stream downstream of the second separation.

For example, the relatively cold H₂-rich stream may be used to cool a warmer stream in the system, for example the syngas feed stream, leading to efficiencies, and to bring the H₂-rich stream to a temperature at which it can be further utilized.

In examples of the invention, preferably the final hydrogen-rich fraction is used as an internal cooling stream.

The method may further include warming one or more of the CO₂-rich fractions after separation. For example, a relatively cold CO₂-rich stream may be used to cool a warmer stream in the system, for example the syngas feed stream, leading to efficiencies, and to bring the CO₂-rich stream to a temperature at which it can be further utilized. In examples of the invention, the CO₂-rich fraction is used as an internal cooling stream.

Preferably the method includes decompressing the H₂-rich stream downstream of the second separation.

One or more of the H₂-rich streams may be decompressed. In preferred examples, the final hydrogen-rich fraction is decompressed and/or warmed in order to bring it to any temperature and pressure required for its further utilisation. In order to improve the efficiency of the energy utilisation of the process this stage may be effected by passing the hydrogen-rich fraction through one or more expanders, for example one or more turboexpanders.

Preferably the method further includes the step of expanding at least one of the separated H₂-rich vapour streams to recover mechanical work. Preferably the final separated H₂-rich vapour stream is expanded to recover mechanical work.

Preferably the expansion of the H₂-rich vapour is carried out using a turbo-expander. Preferably the expansion is carried out using a series of turbo-expanders. When the H₂-rich vapour is expanded, its temperature is reduced. Preferably the cooled stream is used as an internal coolant stream in the system.

Preferably the method includes the step of expanding the H₂-rich gas using a series of expanders, an expanded H₂-rich stream between two expanders of the series being used as a coolant.

The H₂-rich stream may be used as a coolant alternatively, or in addition, upstream and/or downstream of the expander(s).

The method may further include the steps of expanding the H₂-rich gas such that mechanical work is recovered, preferably using a turbo-expander.

The mechanical work recovered might for example be recovered by expanding the H₂-rich gas in a turboexpander. In an example where a series of turboexpanders is provided, preferably the expanded H₂-rich stream a series of interstage heat exchangers. In an example of an arrangement of a series of turboexpanders, in each turboexpander the hydrogen rich fraction is progressively expanded isentropically reducing its pressure and releasing expansion energy which in turn drives a turbine capable of recovering this energy as mechanical work. This mechanical work can if desired be used elsewhere in the process thereby minimising overall energy usage. For example, the recovered energy can be used to run one or more compressors of the system.

The expansion of the hydrogen-rich fraction also causes it to cool and the cooling capacity generated can be used in the interstage coolers to cool warmer streams in the system. In a preferred embodiment these interstage coolers are integrated into a single or array of multichannel heat exchangers though which the incoming shifted gas and/or other streams also flow in order to manage the cooling capacity of the whole system efficiently. In performing these series of expansions and coolings it is generally important not to let the temperature of the expanded hydrogen rich fraction after each turboexpansion fall below the triple point temperature of carbon dioxide in order to prevent progressive blockage of the transfer line between each turboexpander and interstage cooler by build-up over time of frozen, carbon dioxide derived from any small amounts still remaining in this fraction. Once the hydrogen rich fraction has reached its desired temperature and pressure it can be used for its chosen duty.

Subsequent treatment of the liquid carbon dioxide recovered will depend on its intended use. It may for example be piped or transported off-site for underground storage. The liquid carbon dioxide may if desired be warmed by passing it through one or more of the cooling stages, for example one or more of the multichannel heat exchangers to utilise its cooling capacity also.

While the carbon dioxide withdrawn in the separation stage will be in the liquid phase, it will be understood that carbon dioxide elsewhere in the process may be in a supercritical dense phase. For example, when the liquid carbon dioxide is warmed as suggested above, the temperature of the carbon dioxide may rise above the critical temperature. References herein to liquid carbon dioxide should be construed accordingly.

Preferably the liquefied carbon dioxide streams from the first and second, and any other separation stages are combined, for example prior to being sequestrated.

The hydrogen-rich stream may be fed to the combustor of a gas turbine power plant. Accordingly, an advantage of examples of the invention is that hydrogen-rich gas streams may be obtained at a pressure that is at or above the minimum pressure required for feeding the gas directly (for example without further compression of the gas being necessary) to the feed of the gas turbine equipment. Thus in some examples, the hydrogen-rich gas may be obtained at a pressure that is at or above the minimum fuel gas feed pressure (inlet pressure) for the combustor(s) of the gas turbine(s) of the power plant thereby eliminating the necessity for further compression of the gas (although some further compression might be nevertheless provided in some arrangements).

By carrying out a two-stage separation with the two steps being at different pressures, it is possible to separate out a significant amount of carbon dioxide from the synthesis gas before compression of the gas stream to a higher pressure is carried out, thus reducing the amount of gas being compressed to the high pressure and thus the power required for compression of the gases in the system overall.

A further aspect of the invention provides an apparatus for separating a carbon-dioxide-rich liquid stream from a synthesis gas including carbon dioxide and hydrogen, the apparatus including:
a) two separator stages each arranged for separating a cooled two-phase mixture into a CO₂-rich liquid fraction and a H₂-rich gas fraction, the second separator stage being arranged downstream of the first separator stage such that a H₂-rich fraction from the first separator stage is fed to the second separator stage;
b) a compressor arranged between the two separator stages such that the separation in the second separator stage is operated in use at a pressure higher than a pressure at which the separation in the first separator stage is carried out. The apparatus preferably further includes:
   c) a cooling stage for carrying out a first cooling step to cool a synthesis gas feed stream upstream of the first separator stage, and for carrying out a second cooling step to the separated H₂-rich stream, the cooling stage including at least one heat exchanger arranged for exchanging heat between at least one separated H₂-rich stream or CO₂-rich stream and the synthesis gas feed
   d) at least one expander for decreasing the pressure of a separated H₂-rich vapour stream, and preferably to recover mechanical work.

The expander may comprise a turbo-expander, or any other appropriate apparatus.

The process preferably further includes exchanging heat between the expanded H₂-rich stream and another process stream in the system, for example a gas feed stream, H₂-rich stream or CO₂-rich stream.

In relation to any aspect of the invention, the system preferably provides two expanders, for example two turboexpansion devices. Preferably the method includes the steps of carrying out first and second expansions of one or more H₂-rich streams. Preferably one or more, preferably all of the expanded streams are subsequently used to cool at least one other stream in the system, or in a related system.

It will be understood that the H₂-rich fraction from the first separator stage might not be fed directly to the second separator stage, for example there may be one or more further intermediate separation stages.

In preferred arrangements, the apparatus further includes means (for example a turbo expander) for reducing the pressure of the H₂-rich fraction downstream of the separator stage. Preferably the apparatus is arranged such that the expanded H₂-rich fraction is subsequently used as an internal coolant elsewhere in the apparatus or in a related apparatus. Where the apparatus includes a plurality of expanders, preferably the apparatus is such that the H₂-rich fraction is used as a coolant after each expansion step, although other arrangements are of course possible.

In any of the examples described herein, and any of the aspects of the invention as appropriate, other process steps may be included, and further components included in the system as required. For example, the process may include a solvent separation stage, for example to remove CO₂, H₂S or other component from one or more streams. For example, prior to expansion, H₂ rich vapour stream may be fed to a solvent extraction system in which the vapour stream is contacted with a solvent which absorbs residual CO₂ contained therein. Solvent extraction processes for effecting this separation include the Rectisol™ and Selexol™ processes which respectively use refrigerated methanol and a refrigerated mixture of dimethyl ethers of polyethylene glycol as the absorbent. Alternatively the absorbent can be amine based for example monoethanolamine, diethanolamine, methyldiethanolamine diisopropylamine or the like. Any other appropriate method may be used. Alternatively, or in addition, solvent separation stage(s) may be included at other parts of the system.

The invention also provides apparatus and/or methods being substantially as herein described, optionally having reference to one or more of the accompanying drawings.

Features described herein may be provided independently or in any appropriate combination. In particular, method features may be provided as corresponding apparatus features and vice versa.

One or more embodiments of the invention will now be described by way of example, having reference to the accompanying drawings, of which:
Figure 1 illustrates schematically a first example of a separation apparatus for separating carbon dioxide from a synthesis gas feed stream;
Figure 2 illustrates schematically a second example of a separation apparatus for separating carbon dioxide from a synthesis gas feed stream.

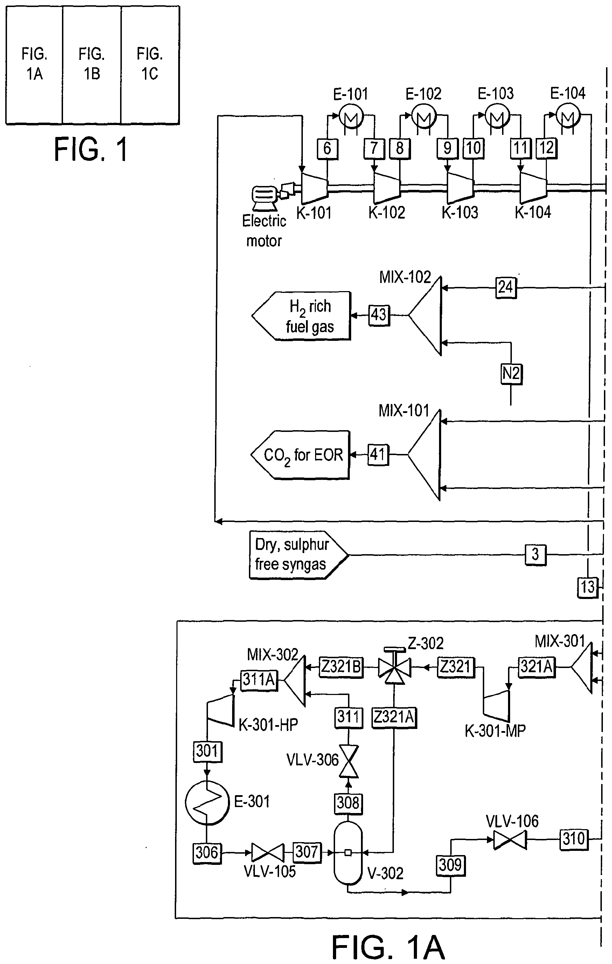

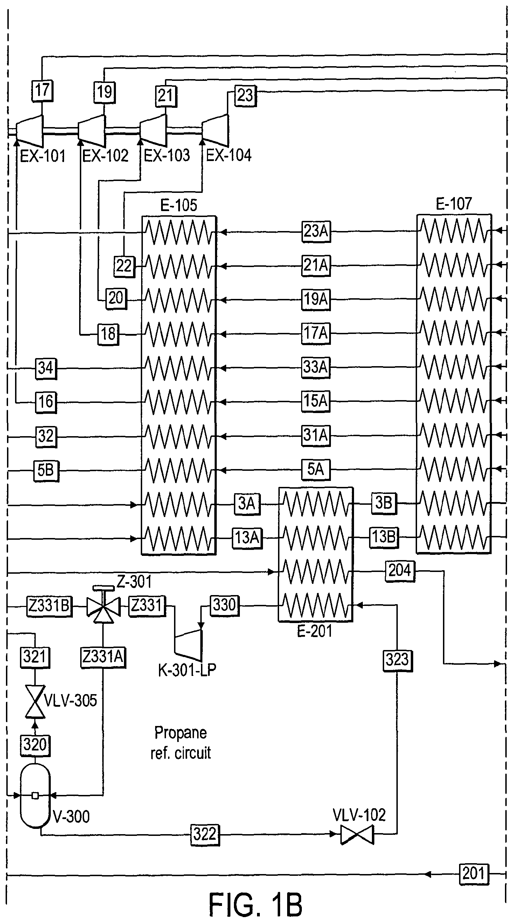

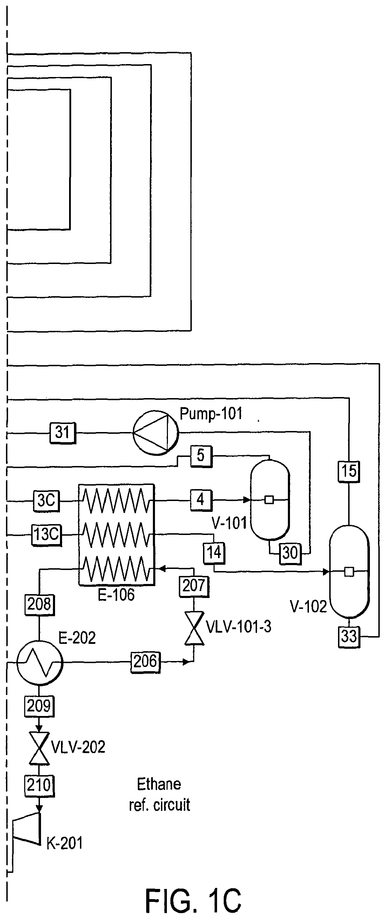

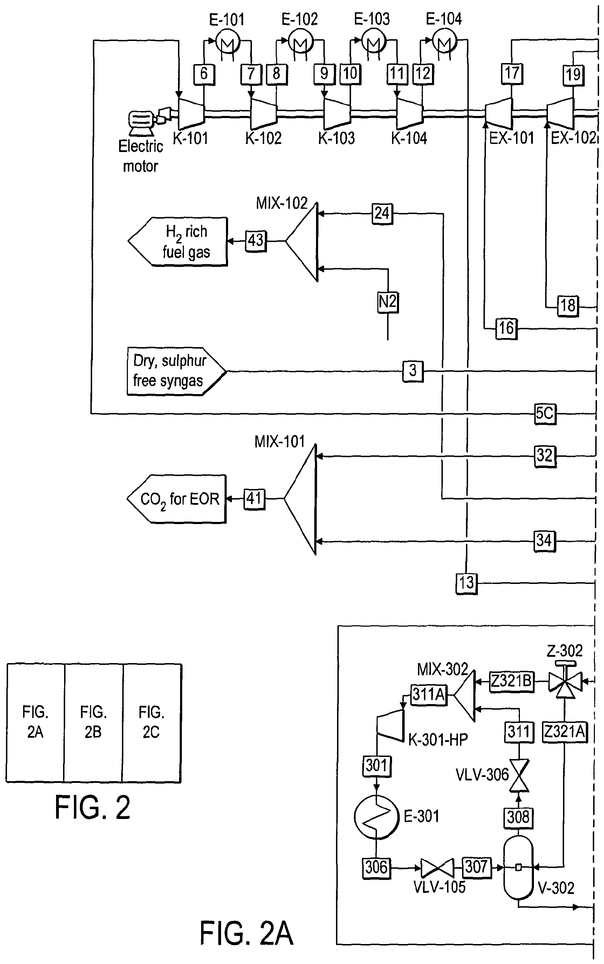

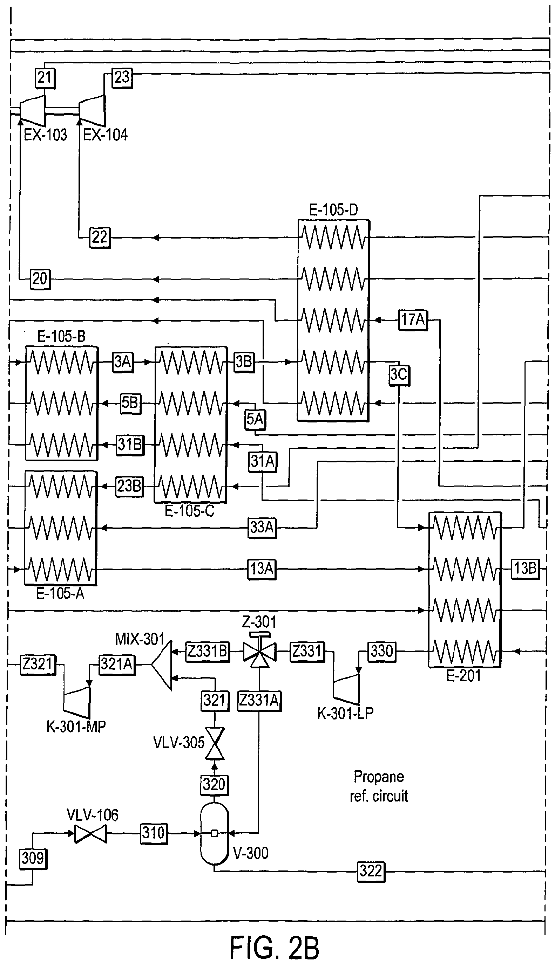

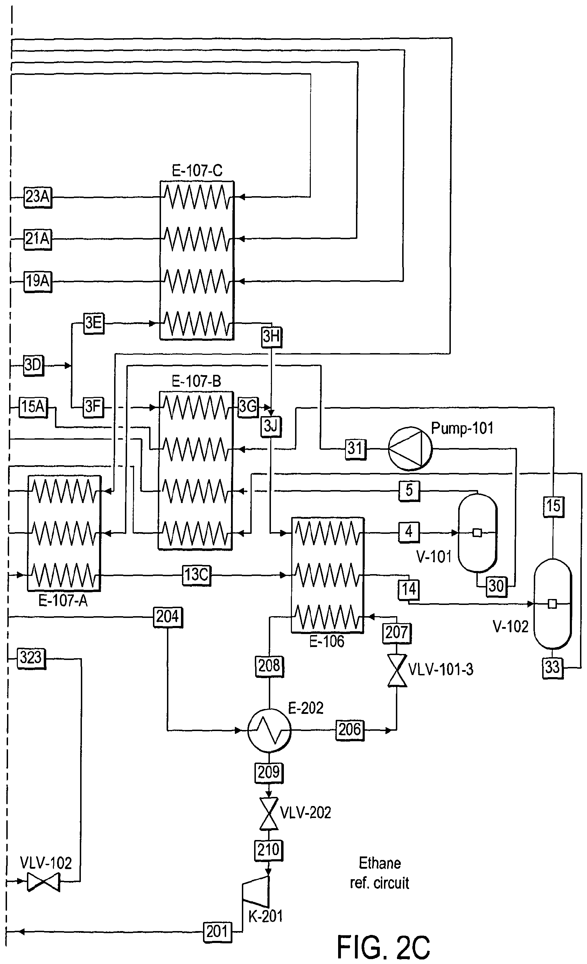

Figures 1 and 2 show process flow diagrams for examples of a method in which carbon dioxide is separated from a shifted synthesis gas feed stream.

The shifted synthesis gas feed stream may for example have arisen in an Integrated Gasification Combined Cycle (IGCC) where it is desired to recover a carbon dioxide- and hydrogen sulphide- free, hydrogen-rich stream for subsequent combustion in a hydrogen power plant.

The synthesis gas feed stream may for example be generated from a solid fuel such as petroleum coke or coal in a gasifier or from a gaseous hydrocarbon feedstock in a reformer. The synthesis gas stream from the gasifier or reformer contains high amounts of carbon monoxide. Accordingly, the synthesis gas stream is typically treated in a shift converter unit such that at least a portion, preferably substantially all, of the carbon monoxide contained in the synthesis gas stream is converted to carbon dioxide over a shift catalyst according to the water gas shift reaction (WGSR):

CO + H₂O ↔ CO₂ + H_{2.}

The shift converter unit may be any appropriate type, for example a single shift reactor containing a shift catalyst. The shift converter unit may comprise a high temperature shift reactor containing a high temperature shift catalyst and a low temperature shift reactor containing a low temperature shift catalyst.

Any hydrogen sulfide (H₂S) in the synthesis gas may in some examples be removed by an appropriate method before separation of the carbon dioxide.

Preferably the synthesis gas is cooled upstream of the cryogenic separation plant, for example, to a temperature in the range of 20 to 50°C, for example, about 40°C to condense out for example water. After removal of any condensate, the synthesis gas feed stream may be dried prior to being passed to the CO₂ condensation plant, as any moisture in the synthesis gas feed stream may freeze and potentially cause blockages in the plant. The synthesis gas feed stream may be dried by any appropriate method, for example by being passed through a molecular sieve bed or an absorption tower that employs triethylene glycol to selectively absorb the water, preferably a molecular sieve bed. Preferably, the dried synthesis gas feed stream has a water content of less than 1 ppm (on a molar basis).

In an example method using apparatus shown in Figure 1, dry shifted synthesis gas feed stream 3 is fed at a pressure of 60 barg and a temperature of about 40 degrees C to a cooling system including a plurality of multichannel heat exchangers E105, E201, E107 and E106.

The feed stream 3 is first passed to a first pre-cooling multichannel heat exchanger E105. In this example, the first multichannel heat exchanger E105 includes channels for ten different streams including low-temperature liquid carbon dioxide product streams and hydrogen-rich product streams as further discussed below.

In this example, the heat exchanger is a multichannel heat exchanger, for example, a plate fin heat exchanger or a printed circuit heat exchanger, with the dried synthesis gas feed stream 3 being passed through at least one channel of the multichannel heat exchanger E105 and a plurality (here eight) of cold process streams being passed through further channels of the multichannel heat exchanger E105 such that the dried synthesis gas stream 3 is cooled against the cold process streams.

Next, the cooled feed gas stream 3A is fed to a second heat exchanger E201 where it is further cooled against an external refrigerant stream (here propane), and the cooled stream 3B from the second heat exchanger E201 is fed to a third heat exchanger E107 where it is cooled against further internal low-temperature streams of carbon dioxide-rich and hydrogen-rich streams. The cooled stream 3C from the third heat exchanger E106 is fed to a fourth heat exchanger E106 where it is further cooled against an external refrigerant stream (here ethane). The cold stream 4 leaving the fourth heat exchanger E106 is at a temperature of about -50 degrees C and a pressure of 56 bar.

Preferably the arrangement is such that there is little or no pressure drop of the feed stream across the stages of the cooling system.

The first cold stream 4 comprises a two-phase mixture and is fed to a first separator V-101 where it is separated into a first liquid carbon dioxide rich fraction 30 and a first hydrogen rich vapour fraction 5. The first separation step removes approximately 70 to 80 mol% of the carbon dioxide of the syngas feed stream 3.

The first carbon dioxide-rich stream 31 is fed through channels of the third and first heat exchangers E107 and E105 to warm the stream 31 and provide cooling to the syngas streams 3, 13. A pump 101 is provided to pump the liquid carbon dioxide.

The first hydrogen-rich syngas stream 5 leaving the separator V101 is fed through the third and first heat exchangers E107 and E105 to provide cooling to the syngas streams 3, 13.

The warmed hydrogen rich stream 5B is then fed to a series of compressors K101, 102, 103 and 104 provided with intermediate cooling at coolers E101, 102, 103 and 104. In some examples such coolers could be integrated with other cooling elements of the system, for example with heat exchangers of the pre-cooling and/or interstage cooling system.

Thus the hydrogen-rich stream is compressed in four steps to a pressure of 150 bar. The pressurised stream 13 is then provided with interstage cooling using the series of heat exchangers E105, 201, 107 and 106 of the precooling system which cool the pressurised stream to form a cooled pressurised stream 14 at a pressure of 150 bar and a temperature of -50 degrees C comprising a two-phase mixture which is passed to the second separator V102 where a second liquid carbon dioxide-rich stream 33 and a second hydrogen-rich stream 15 are withdrawn. Both the cold separated streams 33, 15 are passed back through the third and first heat exchangers E107 and E105 to cool the syngas streams 3, 13. The warmed carbon dioxide stream 34 is then mixed with the first warmed carbon dioxide stream 32.

The second cooled hydrogen-rich stream 16 is at a high pressure. Typically, the fuel gas feed pressure (inlet pressure) for the combustor of the gas turbine(s) is in the range of 25 to 45 barg, preferably, 28 to 40 barg, in particular, 30 to 35 barg. Typically, the combustor of the gas turbine(s) is operated at a pressure of 15 to 20 bar absolute. Accordingly, the H₂ enriched synthesis gas vapour stream may be obtained above the minimum fuel gas feed pressure for the combustor(s) of the gas turbine(s) so that there is no requirement for a gas compressor to compress the hydrogen enriched synthesis gas stream (fuel gas stream) to the inlet pressure for the combustor(s) of the gas turbine(s). In the example shown, the H₂ enriched synthesis gas vapour stream 16 is expanded in a series of turboexpanders, for example to bring the pressure of the stream down towards the inlet pressure of the combustor(s) of the gas turbine(s).

The isentropic expansion of the hydrogen enriched vapour stream in the turboexpanders EX101, 102, 103, 104 produces work that may for example be used to drive at least one turbine or an electric motor thereby generating electricity for export or for use within the process (for example, for operating the CO₂ pumps and/or a compressor of an external refrigeration circuit). The turboexpanders are preferably mounted on a common shaft. Preferably they are mounted on a common shaft with one or more compressors Preferably, the turboexpanders are operated with substantially the same pressure ratio across each turboexpander, for example, a pressure ratio in the range of 0.88 to 0.66.

The H₂ enriched synthesis gas vapour stream 16 is cooled by isentropic expansion in the turboexpander(s) thereby allowing additional pre-cooling of the synthesis gas feed stream.

Between the exit of a turboexpander and the feed of the next turboexpander of the series, the cooled hydrogen-rich gas vapour stream 17, 19, 21, and on exit of the final turboexpander stream 23, are each passed through the cooling system, for example one or more of the heat exchangers. In the example shown, the cooled streams 17, 19, 21 and 23 pass through the third and first heat exchangers E105 and 107.

In the present example, a nitrogen diluent is added to the hydrogen enriched synthesis gas vapour stream. In some cases a diluent, for example nitrogen or steam may be required in view of the required properties of the fuel for the combustor of the gas turbine. In some examples such a diluent will not be necessary.

The liquid CO₂ stream(s) that are withdrawn from the separator vessel(s) of the cryogenic separation stage(s) preferably comprise at least 90 mole% CO₂, in particular, at least about 94 mole % CO₂, the remainder being mostly hydrogen with some inert components, for example, nitrogen and/or CO. Where the cryogenic separation plant comprises a plurality of cryogenic separation stages arranged in series, the liquid CO₂ streams that are withdrawn from the stages are preferably combined. The liquid CO₂ stream or combined liquid CO₂ stream may be further treated, for example for removal of residual hydrogen or other components. The liquid CO₂ stream may then if required be pumped to the desired export pressure, for example, a pipeline delivery pressure.

Figure 2 shows an alternative arrangement for use in separating carbon dioxide for a synthesis gas. The arrangement is similar to that of Figure 1 except that the first heat exchanger E105 is replaced by four heat exchangers E105 A to D, each having fewer channels, and third heat exchanger E107 is replaced by four heat exchangers E107 A to D.

The fluid flow through the arrangement of Figure 2 is now discussed further in relation in particular to the changes in temperature and pressure. As for Figure 1 it is seen that the two separation steps are carried out at substantially the same temperature. As discussed below, other arrangements are possible.

In an example of a method using the arrangement of Figure 2, a dry, H₂S-free syngas feed stream 3 contained about 55.6 mol% H₂, and 42.7 mol% CO₂ in addition to other components including CO, CH₄, N₂ and was fed to heat exchanger E105B at a temperature of 40 degrees C and pressure of 57 bar. Cooling against the H₂ and CO₂-containing product streams from the first separation stage in E105B brings the temperature of stream 3A to about -20 degrees C. Further cooling against internal product streams in heat exchangers E105C and E105D, and at heat exchanger E201 against an external propane refrigerant brings the temperature to -33.3 degrees C at stream 3D. Stream 3D is then split into two streams 3E and 3F which pass through heat exchangers E107C and B including internal coolant streams to give streams 3H and 3G respectively which recombine to give stream 3J. Stream 3J is then fed to a further heat exchanger (E106) including an external refrigerant (here ethane) to cool the combined stream to -50 degrees C (stream 4 containing a two-phase mixture).

Stream 4 is then separated in separator V101 into a carbon dioxide-rich stream 30 including 98.9 mol% CO₂, and a hydrogen-rich stream 5 including more than 83 mol% H₂ and less than 15 mol% CO₂.

Using the CO₂ stream as an internal coolant raises the temperature of the CO₂ stream to +20 degrees C, the pressure of the CO₂ stream 32 being about 150 bar.

Using the H₂ stream as an internal coolant raises the temperature of the H₂-rich gas to 15 degrees C.

The H₂-rich stream is then compressed with inter-compressor cooling so that stream 13 exiting the compressor series has a pressure of 151 bar and temperature of 40 degrees C. Cooling through heat exchangers E105A, E201 (against propane), E107A and E106 (against ethane) lowers the temperature to about -50 degrees C for stream 14, being at a pressure of 150.5 bar. Stream 14 is a two-phase mixture which is passed to the second separator V102 where it is separated into a CO₂-rich liquid stream 33 containing more than 97 mol% CO₂ and less than 1 mol% hydrogen, and a H₂-rich vapour stream 15 containing more than 90 mol% H₂, and less than 7 mol% CO₂.

The CO₂ stream provides internal cooling in heat exchangers E107B and E105A. The H₂ stream 15 provides internal cooling in heat exchangers E107B, E105D before being passed to the series of expanders EX 101 to 104 where expansion of the vapour across the first expander reduces the temperature and pressure of the stream from -32 to -53 degrees C and 150 to 102 bar. The low temperature stream is used as an internal coolant before being returned to the next turboexpander Ex102 at a temperature of -32 degrees C and so on until the stream exiting the final expander EX104 is at a temperature of -53 degrees C and a pressure of 31 bar. This stream passes as a coolant through several of the heat exchangers. Stream 24 exiting the apparatus is at a temperature of about 37 degrees C, and a pressure of 30 bar which is a suitable temperature and pressure for a fuel feed for a turbine power generator.

In the two examples described, two separation stages were provided operating at two different pressures, but at substantially the same temperature.

Other arrangements are possible. For example, the two separation stages might be operated at different temperatures, the cooling of the feed streams can be carried out so that the desired temperatures were achieved.

Alternatively, or in addition, further separation stages could be provided. Different combinations of pressures and temperatures could be provided at the different stages. For example, two adjacent separations might be carried out at the same pressure, a third being at a different pressure. One or more different temperatures could be used for the separation steps.

In the examples described, there are no compressors provided upstream of the first separator, the first separation being carried out at the feed gas pressure. Different arrangements are possible. For example, an initial compression may be carried out. With or without an initial compression, the first separation might be carried out at elevated pressure, for example up to 80 bar, 100 bar or 120 bar. A low pressure separation might be carried out followed by an intermediate and/or high pressure separation. The high pressure separation may be carried out at a pressure greater than 100bar, greater than 120 bar or 150 bar or more. For example where a feed gas pressure is low, an initial compression may be provided to compress the gas to any appropriate pressure as required. For example, a feed gas of 30 bar might be compressed initially to more than 70 bar for an initial separation step.

It will be appreciated that the number and arrangement of compressors, heat exchangers, and expanders have been shown by way of example and different arrangements are possible.

In some examples, a separation step may be carried out intermediate compressors of a series of compressors.

Different apparatus may be provided to effect the expansion of the H₂-rich gas stream. For example, the gas may be expanded across a valve. Preferably the expansion apparatus is such that at least some recovery of work is obtained. Preferably the apparatus is such that there is a reduction in temperature of the H₂-rich gas stream across the expander. Preferably the cooled expanded H₂-rich gas stream is subsequently used as an internal coolant.

In examples, one or other or both of the external refrigerant systems might not be required.

The embodiments described above have been given only by way of example, variations being possible within the scope of the invention.

In summary, aspects of the invention provide a method of separating a carbon-dioxide-rich liquid stream from a synthesis gas including carbon dioxide and hydrogen, includes carrying out a first cooling step to cool a synthesis gas feed stream using at least one heat exchanger such that a first two-phase mixture is formed. The first two-phase mixture is passed at a first pressure and a first temperature to a first separator and a first separation is carried out to separate the first mixture into a first CO₂-rich liquid stream and a H₂-rich gas stream. The H₂-rich gas stream is pressurised and a second cooling step is carried out to cool the H₂-rich gas stream using at least one heat exchanger such that a second two-phase mixture is formed. The second mixture is passed at a second pressure and a second temperature to a second separator, the second pressure being higher than the first pressure and a second separation is carried out to separate the second mixture into a second CO₂-rich liquid stream and a further H₂-rich gas stream. Preferred examples further include the step of expanding at least one of the separated H₂-rich vapour streams to recover mechanical work and/or to cool the H₂-rich stream and subsequently using the expanded H₂-rich stream as a coolant in the separation system.

## Claims

1. A method of separating a carbon-dioxide-rich liquid stream from a synthesis gas including carbon dioxide and hydrogen, the method comprising the steps of:
a) carrying out a first cooling step to cool a synthesis gas feed stream such that a first two-phase mixture is formed;
b) passing the first two-phase mixture at a first pressure and a first temperature to a first separator,
c) carrying out a first separation to separate the first mixture into a first CO₂-rich liquid stream and a H₂-rich vapour stream;
d) pressurizing the H₂-rich vapour stream;
e) carrying out a second cooling step to cool the H₂-rich vapour stream such that a second two-phase mixture is formed,
f) passing the second mixture at a second pressure and a second temperature to a second separator, the second pressure being higher than the first pressure;
g) carrying out a second separation to separate the second mixture into a second CO₂-rich liquid stream and a further H₂-rich vapour stream

2. A method according to claim 1, further including the step of feeding a separated hydrogen-rich vapour stream to an expansion system including an expander, wherein the hydrogen-rich vapour stream is subjected to expansion such that an expanded hydrogen-rich vapour stream is withdrawn from the expander at reduced temperature and pressure, the method further including using the expanded hydrogen rich vapour stream as a coolant.

3. A method according to claim 2, wherein the expanded hydrogen-rich vapour stream is used to cool one or more streams selected from a hydrogen-rich gas stream, a carbon dioxide stream and a synthesis gas stream.

4. A method according to claim 2 or claim 3, wherein the expander effects isentropic expansion of the hydrogen-rich vapour in the expander and generates motive power.

5. A method according to any preceding claim in which the first pressure is substantially the feed pressure of the synthesis gas.

6. A method according to any preceding claim, wherein the first pressure is not less than 50 bar.

7. A method according to any of claims 1 to 5 wherein the first pressure is less than 150 bar, preferably less than 100 bar, and/or wherein the second pressure is greater than 100 bar, preferably 150 bar or more.

8. A method according to any of claims 1 to 7, wherein the first temperature is less than -50 degrees C, and/or wherein the second temperature is less than -50 degrees C, preferably -53 degrees C or less.

9. A method according to any of claims 1 to 8, wherein the second temperature is substantially the same as the first temperature.

10. A method according to any of claims 1 to 9 further including the step of carrying out a third separation of liquid carbon dioxide at a third separation stage, a two-phase mixture at the third separation stage being at a third temperature and third pressure.

11. A method according to any of claims 1 to 10 wherein at least one of the cooling steps is carried out using one or more internal refrigerant streams

12. A method according to any of claims 1 to 11, in which a cooling step is carried out using at least one heat exchanger, preferably a multi-channel heat exchanger carrying one or more internal and/or external refrigerants or coolants.

13. A method according to any of claims 1 to 12, further including the step of expanding the H₂-rich vapour using an expander, feeding the expanded H₂-rich vapour stream to a heat exchanger system including at least one for exchanging heat between at least two streams of the process, and feeding the H₂-rich vapour stream from the heat exchanger system to a further expander.

14. An apparatus for separating carbon-dioxide rich liquid stream from a synthesis gas according to a method of any of claims 1 to 13, the apparatus including
a) two separator stages each arranged for separating a cooled two-phase mixture into a CO2-rich liquid fraction and a H₂-rich vapour fraction, the second separator stage being arranged downstream of the first separator stage such that a H2-rich vapour fraction from the first separator stage is fed to the second separator stage;
b) a compressor arranged between the two separator stages such that the separation in the second separator stage is operated in use at a pressure higher than a pressure at which the separation in the first separator stage is carried out.

15. An apparatus according to claim 14 , further including:
a cooling stage for carrying out a first cooling step to cool a synthesis gas feed stream upstream of the first separator stage, and for carrying out a second cooling step to the separated H₂-rich vapour stream, the cooling stage including at least one heat exchanger arranged for exchanging heat between at least one separated H₂-rich stream or CO₂-rich stream and the synthesis gas feed, and at least one expander for reducing the pressure of a separated H₂-rich vapour stream.

## Patentansprüche

1. Verfahren zum Abscheiden eines kohlenstoffdioxidreichen Flüssigstroms aus einem Synthesegas, das Kohlendioxid und Wasserstoff enthält, wobei das Verfahren die Schritte aufweist von:
a) Durchführen eines ersten Kühlschritts, um einen Synthesegaszuführstrom zu kühlen, so dass eine erste Zweiphasenmischung gebildet wird;
b) Weiterreichen der ersten Zweiphasenmischung bei einem ersten Druck und einer ersten Temperatur an einen ersten Abscheider,
c) Durchführen einer ersten Abscheidung, um die erste Mischung in einen ersten CO₂-reichen Flüssigstrom und einen H₂-reichen Dampfstrom zu separieren;
d) Druckbeaufschlagen des H₂-reichen Dampfstroms;
e) Durchführen eines zweiten Kühlschritts, um den H₂-reichen Dampfstrom zu kühlen, so dass eine zweite Zweiphasenmischung gebildet wird,
f) Weiterreichen der zweiten Mischung bei einem zweiten Druck und einer zweite Temperatur an einen zweiten Separator, wobei der zweite Druck höher ist als der erste Druck;
g) Durchführen einer zweiten Separierung, um die zweite Mischung in einen zweiten CO₂-reichen Flüssigstrom und einen weiteren H₂-reichen Dampfstrom zu separieren

2. Verfahren nach Anspruch 1, ferner enthaltend den Schritt des Zuführens eines separierten wasserstoffreichen Dampfstroms an ein Expansionssystem, das einen Expander beinhaltet, wobei der wasserstoffreiche Dampfstrom so der Expansion ausgesetzt wird, dass ein expandierter wasserstoffreicher Dampfstrom aus dem Expander bei reduzierter Temperatur und reduziertem Druck abgezogen wird, wobei das Verfahren ferner das Verwenden des expandierten wasserstoffreichen Dampfstroms als ein Kühlmittel enthält.

3. Verfahren nach Anspruch 2, wobei der expandierte wasserstoffreiche Dampfstrom verwendet wird, einen oder mehrere Ströme, die ausgewählt sind aus einem wasserstoffreichen Gasstrom, einem Kohlenstoffdioxidstrom und einem Synthesegasstrom, zu kühlen.

4. Verfahren nach Anspruch 2 oder Anspruch 3, wobei der Expander eine isentrope Expansion des wasserstoffreichen Dampfs in dem Expander bewirkt und Bewegungsleistung generiert.

5. Verfahren nach einem der vorherigen Ansprüche, in dem der erste Druck im Wesentlichen der Zuführdruck des Synthesegases ist.

6. Verfahren nach einem der vorhergehenden Ansprüche, wobei der erste Druck nicht geringer ist als 50 bar.

7. Verfahren nach einem der Ansprüche 1 bis 5, wobei der erste Druck geringer ist als 150 bar, vorzugsweise geringer als 100 bar, und/oder wobei der zweite Druck größer ist als 100 bar, vorzugsweise 150 bar oder mehr.

8. Verfahren nach einem der Ansprüche 1 bis 7, wobei die erste Temperatur geringer ist als -50 Grad C, und/oder wobei die zweite Temperatur geringer ist als -50 Grad C, vorzugsweise -53 Grad C oder geringer.

9. Verfahren nach einem der Ansprüche 1 bis 8, wobei die zweite Temperatur im Wesentlichen dieselbe ist wie die erste Temperatur.

10. Verfahren nach einem der Ansprüche 1 bis 9, ferner enthaltend den Schritt des Durchführens einer dritten Separierung von flüssigem Kohlendioxid in einer dritten Separationsstufe, wobei eine Zweiphasenmischung in der dritten Separationsstufe bei einer dritten Temperatur und einem dritten Druck vorliegt.

11. Verfahren nach einem der Ansprüche 1 bis 10, wobei zumindest einer der Kühlschritte ausgeführt wird unter Verwendung einer oder mehrerer interner Kältemittelströme

12. Verfahren nach einem der Ansprüche 1 bis 11, in dem ein Kühlschritt durchgeführt wird unter Verwendung zumindest eines Wärmetauschers, vorzugsweise eines Mehrkanal-Wärmetauschers, der eines oder mehrere interne und/oder externe Kältemittel oder Kühlmittel trägt.

13. Verfahren nach einem der Ansprüche 1 bis 12, ferner enthaltend den Schritt aus Expandieren des H₂-reichen Dampfes unter Verwendung eines Expanders, Zuführen des expandierten H₂-reichen Dampfstroms an ein Wärmetauschersystem, das zumindest einen zum Tauschen von Wärme zwischen zumindest zwei Strömen des Verfahrens und Zuführen des H₂-reichen Dampfstroms aus dem Wärmetauschersystem zu einem weiteren Expander enthält.

14. Vorrichtung zum Separieren eines kohlendioxidreichen Flüssigstroms aus einem Synthesegas gemäß einem Verfahren nach einem der Ansprüche 1 bis 13, wobei die Vorrichtung enthält
a) zwei Separatorstufen, die jeweils zum Separieren einer gekühlten Zweiphasenmischung in eine CO2-reiche Flüssigfraktion und eine H2-reiche Dampffraktion angeordnet sind, wobei die zweite Separatorstufe stromabwärts der ersten Separatorstufe so angeordnet ist, dass eine H2-reiche Dampffraktion aus der ersten Stufe zu der zweiten Separatorstufe zugeführt wird;
b) einen Kompressor, der zwischen zwei Separatorstufen so angeordnet ist, dass die Separation in der zweiten Separatorstufe in der Anwendung bei einem Druck betrieben wird, der höher ist als ein Druck, bei welchem die Separation in der ersten Separatorstufe durchgeführt wird.

15. Vorrichtung nach Anspruch 14, ferner enthaltend:
eine Kühlstufe zum Durchführen eines ersten Kühlschritts, um einen Synthesegaszuführstrom stromaufwärts der ersten Separatorstufe zu kühlen, und wobei zum Durchführen eines zweiten Kühlschritts mit dem separierten H₂-reichen Dampfstrom die Kühlstufe zumindest einen Wärmetauscher enthält, der zum Tauschen von Wärme zwischen zumindest einem separierten H₂-reichen Storm oder CO₂-reichen Strom und der Synthesegaszufuhr angeordnet ist, und zumindest einen Expander zum Reduzieren des Drucks aus einem separierten H₂-reichen Dampfstrom.

## Revendications

1. Procédé de séparation d'un courant de liquide riche en dioxyde de carbone d'un gaz de synthèse comportant du dioxyde de carbone et de l'hydrogène, le procédé comprenant les étapes de :
a) réalisation d'une première étape de refroidissement pour refroidir un courant de fourniture de gaz de synthèse de sorte qu'un premier mélange à deux phases soit formé ;
b) passage du premier mélange à deux phases à une première pression et une première température dans un premier séparateur,
c) réalisation d'une première séparation pour séparer le premier mélange en un premier courant de liquide riche en CO₂ et un courant de vapeur riche en H₂ ;
d) pressurisation du courant de vapeur riche en H₂ ;
e) réalisation d'une deuxième étape de refroidissement pour refroidir le courant de vapeur riche en H₂ de sorte qu'un deuxième mélange à deux phases soit formé,
f) passage du deuxième mélange à une deuxième pression et une deuxième température dans un deuxième séparateur, la deuxième pression étant supérieure à la première pression ;
g) réalisation d'une deuxième séparation pour séparer le deuxième mélange en un deuxième courant de liquide riche en CO₂ et un autre courant de vapeur riche en H₂.

2. Procédé selon la revendication 1, comportant en outre l'étape de fourniture d'un courant de vapeur riche en hydrogène séparé à un système d'expansion comportant un expanseur, dans lequel le courant de vapeur riche en hydrogène est soumis à une expansion de sorte qu'un courant de vapeur riche en hydrogène expansé soit retiré de l'expanseur à une température et une pression réduites, le procédé comportant en outre l'utilisation du courant de vapeur riche en hydrogène expansé comme refroidisseur.

3. Procédé selon la revendication 2, dans lequel le courant de vapeur riche en hydrogène expansé est utilisé pour refroidir un ou plusieurs courants choisis parmi un courant de gaz riche en hydrogène, un courant de dioxyde de carbone et un courant de gaz de synthèse.

4. Procédé selon la revendication 2 ou la revendication 3, dans lequel l'expanseur effectue une expansion isentropique de la vapeur riche en hydrogène dans l'expanseur et génère une puissance motrice.

5. Procédé selon l'une quelconque des revendications précédentes dans lequel la première pression est sensiblement la pression de fourniture du gaz de synthèse.

6. Procédé selon l'une quelconque des revendications précédentes, dans lequel la première pression n'est pas inférieure à 50 bars.

7. Procédé selon l'une quelconque des revendications 1 à 5 dans lequel la première pression est inférieure à 150 bars, de préférence inférieure à 100 bars, et/ou dans lequel la deuxième pression est supérieure à 100 bars, de préférence 150 bars ou plus.

8. Procédé selon l'une quelconque des revendications 1 à 7, dans lequel la première température est inférieure à -50 degrés C, et/ou dans lequel la deuxième température est inférieure à -50 degrés C, de préférence -53 degrés C ou moins.

9. Procédé selon l'une quelconque des revendications 1 à 8, dans lequel la deuxième température est sensiblement la même que la première température.

10. Procédé selon l'une quelconque des revendications 1 à 9 comportant en outre l'étape de réalisation d'une troisième séparation de dioxyde de carbone liquide à un troisième stade de séparation, un mélange à deux phases au troisième stade de séparation étant à une troisième température et une troisième pression.

11. Procédé selon l'une quelconque des revendications 1 à 10 dans lequel au moins une des étapes de refroidissement est réalisée en utilisant un ou plusieurs courants de réfrigérant interne.

12. Procédé selon l'une quelconque des revendications 1 à 11, dans lequel une étape de refroidissement est réalisée en utilisant au moins un échangeur de chaleur, de préférence un échangeur de chaleur à plusieurs canaux transportant un ou plusieurs réfrigérants ou refroidisseurs internes et/ou externes.

13. Procédé selon l'une quelconque des revendications 1 à 12, comportant en outre l'étape d'expansion de la vapeur riche en H₂ en utilisant un expanseur, de fourniture du courant de vapeur riche en H₂ expansé à un système d'échangeur de chaleur comportant au moins l'un pour échanger de la chaleur entre au moins deux courants du procédé, et de fourniture du courant de vapeur riche en H₂ du système d'échangeur de chaleur à un autre expanseur.

14. Procédé de séparation d'un courant de liquide riche en dioxyde de carbone d'un gaz de synthèse selon un procédé selon l'une quelconque des revendications 1 à 13, l'appareil comportant
a) deux stades de séparateur agencés chacun pour séparer un mélange à deux phases refroidi en une fraction de liquide riche en CO₂ et une fraction de vapeur riche en H₂, le deuxième stade de séparateur étant agencé en aval du premier stade de séparateur de sorte qu'une fraction de vapeur riche en H₂ du premier stade de séparateur soit fournie au deuxième stade de séparateur ;
b) un compresseur agencé entre les deux stades de séparateur de sorte que la séparation dans le deuxième stade de séparateur fonctionne lors de l'utilisation à une pression supérieure à une pression à laquelle la séparation dans le premier stade de séparateur est réalisée.

15. Appareil selon la revendication 14, comportant en outre :
un stade de refroidissement pour réaliser une première étape de refroidissement pour refroidir un courant de fourniture de gaz de synthèse en amont du premier stade de séparateur, et pour réaliser une deuxième étape de refroidissement dans le courant de vapeur riche en H₂ séparé, le stade de refroidissement comportant au moins un échangeur de chaleur agencé pour échanger de la chaleur entre au moins un courant riche en H₂ ou un courant riche en CO₂ séparé et la fourniture de gaz de synthèse, et au moins un expanseur pour réduire la pression de courant de vapeur riche en H₂ séparé.
